(19)

**Europäisches Patentamt**
**European Patent Office**
**Office européen des brevets**

(11) **EP 3 428 843 A1**

(12) **EUROPEAN PATENT APPLICATION**

(43) Date of publication:
**16.01.2019 Bulletin 2019/03**

(51) Int Cl.:
**G06K 9/00** *(2006.01)*     *G06K 9/62 (2006.01)*
**G06K 9/46** *(2006.01)*

(21) Application number: **18180136.6**

(22) Date of filing: **27.06.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.07.2017 GB 201711353**

(71) Applicant: **GB Group plc**
**London E14 9QD (GB)**

(72) Inventors:
• **Saez-Trigueros, Daniel**
**London, E14 9QD (GB)**
• **Meng, Li**
**Hatfield, Hertfordshire AL10 9AB (GB)**
• **Hartnett, Margaret**
**London, E14 9QD (GB)**

(74) Representative: **Armstrong, Rosemary**
**Armstrong IPR Limited**
**Innovation Centre**
**NI Science Park**
**Queens Road**
**Belfast, BT3 9DT (GB)**

(54) **IMPROVEMENTS RELATING TO FACE RECOGNITION**

(57) A method of identifying at least one face region having a predominant contribution to face recognition, comprising (i) obtaining a set of face images, (ii) using a face-recognition model to predict a non-occluded identity class for a first face image, (iii) placing an occluder at a first location of the first face image, (iv) using the face-recognition model to predict an occluded identity class for the occluded first face image, (v) comparing the non-occluded identity class with the occluded identity class to generate an occlusion result, (vi) repeating steps (iii) to (v) for a next location of a plurality of locations of the first face image to generate an occlusion map comprising the occlusion results at each of the locations of the first face image, (vii) repeating steps (ii) to (vi) for a next face image of the set of face images to generate an occlusion map for each of the set of face images, (viii) combining the occlusion maps for each of the set of face images to generate an aggregate occlusion map, and (ix) using the aggregate occlusion map to identify the at least one face region having a predominant contribution to face recognition. The invention further comprises a computer program for execution of the method of identifying at least one face region having a predominant contribution to face recognition and a system for identifying at least one face region having a predominant contribution to face recognition. The invention further comprises a method of augmenting a set of training face images for a face-recognition model comprising using the at least one face region having a predominant contribution to face recognition and a method of training a face-recognition model to recognise faces using the augmented set of training face images.

Fig. 2

EP 3 428 843 A1

**Description**

The invention relates to improvements relating to face recognition, particularly identifying face regions having predominant contributions to face recognition and using these in the generation of face-recognition training sets.

Introduction

Convolutional neural network (CNN) models have revolutionised many computer vision applications, particularly face recognition and most of the top performing face recognition models are based on CNNs. These models need to be trained with hundreds of face images to achieve state-of-the-art accuracy, and several large-scale face image datasets have been made publicly available to facilitate this.

Despite the recent success of CNNs, unconstrained face recognition, where there are variations in face image conditions, for example illumination, pose, expression, remains a challenge. This is exacerbated when faces present with an occlusion, such as hair, sunglasses, scarves etc. This is of particular relevance to applications where the subjects are not expected to be cooperative, e.g. in security applications. Recognition of faces with occlusions has been typically handled using either methods that extract local features from the non-occluded regions by detecting and then discarding the occluded regions or methods that attempt to reconstruct the occluded regions. It is an object of the invention to provide a further method of recognition of faces with occlusions.

Summary of the Invention

According to a first aspect of the invention there is provided a method of identifying at least one face region having a predominant contribution to face recognition, comprising

(i) obtaining a set of face images,
(ii) using a face-recognition model to predict a non-occluded identity class for a first face image,
(iii) placing an occluder at a first location of the first face image,
(iv) using the face-recognition model to predict an occluded identity class for the occluded first face image,
(v) comparing the non-occluded identity class with the occluded identity class to generate an occlusion result,
(vi) repeating steps (iii) to (v) for a next location of a plurality of locations of the first face image to generate an occlusion map comprising the occlusion results at each of the locations of the first face image,
(vii) repeating steps (ii) to (vi) for a next face image of the set of face images to generate an occlusion map for each of the set of face images,
(viii) combining the occlusion maps for each of the set of face images to generate an aggregate occlusion map, and
(ix) using the aggregate occlusion map to identify the at least one face region having a predominant contribution to face recognition.

A non-occluded identity class is the identity class predicted by the model when a face does not comprise an occlusion and a occluded identity class is the identity class predicted by the model when a face does comprise an occlusion.

The at least one face region is a region from which the face-recognition model extracts the most discriminative facial features, which are important to achieve a high face recognition accuracy of the model. Moving the occluder around locations of the face images to generate the aggregate occlusion map gives a manner in which to visualise the region or regions of a face which are most sensitive in the face image identity classification process and which have the highest impact on face recognition accuracy of the model.

Using the face-recognition model to predict a non-occluded identity class for a face image may comprise using a pre-trained, CNN-based classifier to predict the identity class.

Placing the occluder at a location of a face image may comprise overlaying the occluder on the face image. Placing the occluder at a location of a face image may comprise placing a centre point of the occluder at the location.

The occluder may comprise a pre-determined size. The method may be carried out using different pre-determined sizes of the occluder. The occluder may have a size of approximately 20 pixels by approximately 20 pixels. Such an occluder can be used to cover small face regions such as one eye, the nose or mouth. The occluder may have a size of approximately 20 pixels by approximately 40 pixels. Such an occluder can cover wider face regions such as both eyes. The occluder may have a size of approximately 40 pixels by approximately 40 pixels. Such an occluder can cover several face regions simultaneously.

The occluder may comprise a random intensity distribution. The occluder may comprise a random greyscale intensity distribution when the face images are greyscale face images. The occluder may comprise a random colour intensity distribution when the face images are colour face images. The occluder may further comprise noise, such as any of salt-and-pepper noise, speckle noise, Gaussian noise.

Using the face-recognition model to predict an occluded identity class for an occluded face image may comprise using a pre-trained, CNN-based classifier to predict the identity class.

Comparing the non-occluded identity class with the occluded identity class for a location of a face image may generate an occlusion result comprising a measure of classification error of the face-recognition model. The classification error is the error between prediction of the non-occluded identity class and prediction of the occluded identity class, i.e. the error introduced when the occluder is placed at the location of the face image.

Comparing the non-occluded identity class with the occluded identity class for a location of a face image may comprise assuming that the non-occluded identity class is correct and generating a binary occlusion result comprising a classification error of 0 when the occluded identity class equals the non-occluded identity class and a classification error of 1 when the occluded identity class is different from the non-occluded identity class when the occluder is placed at the location of the face image.

The binary occlusion result, $O_I(i, j)$, for a location $(i, j)$ of a face image I may be defined as

$$O_I(i, j) = \begin{cases} 0, \text{ if } y'_{i,j} = y \\ \\ 1, \text{ otherwise} \end{cases}$$

where $y'_{i,j}$ is the predicted occluded identity class and $y$ is the predicted non-occluded identity class.

Thus the occlusion result indicates whether placing an occluder at a particular location of a face image would cause the face-recognition model to predict an incorrect identity class.

Combining the occlusion maps for each of the set of face images to generate the aggregate occlusion map may comprise averaging the occlusion results of each occlusion map at each location of the face images to provide an aggregate occlusion map comprising an aggregate occlusion map value at each location of the face images. Combining the occlusion maps for each of the set of face images to generate an aggregate occlusion map may first comprise aligning the set of face images. Aligning the set of face images may comprise using a 2D affine transformation for alignment. Each aggregate occlusion map value may be the mean classification error of the face-recognition model at the location of the face images.

Using the aggregate occlusion map to identify the at least one face region having a predominant contribution to face recognition may comprise identifying the at least one face region as the region comprising a face location having a highest aggregate occlusion map value. This face location will comprise the face location resulting in the highest measure of classification error of the face-recognition model.

The aggregate occlusion map may be used to generate a probability distribution comprising a probability value at each location of the face images. The probability distribution may be generated by applying a softmax function to the aggregate occlusion map. The softmax function may use a temperature parameter. The softmax function may use different temperature parameters for different sizes of the occluder. The softmax function may use any of a temperature parameter of 0.25 with an occluder of size 20 pixels x 20 pixels, a temperature parameter of 0.4 with an occluder of size 20 pixels x 40 pixels, a temperature parameter of 0.6 with an occluder of size 40 pixels x 40 pixels. With high temperature parameters, all locations of the probability distribution have the same probability, with low temperature parameters, locations of the probability distribution with high effects on face recognition are assigned a high probability.

The probability distribution generated from the aggregate occlusion map may be used to identify the at least one face region having a predominant contribution to face recognition. This may comprise identifying the at least one face region as the region comprising a face location of the probability distribution having a highest probability value.

The face-recognition model may comprise a convolutional neural network (CNN) classification face-recognition model.

The set of face images may comprise 1000 face images. Each face image of the set of face images may comprise a greyscale face image. Each face image of the set of face images may comprise a size of 100 pixels by 100 pixels.

According to a second aspect of the invention there is provided a computer program, tangibly embodied on a non-transitory computer readable medium, the computer program including instructions for causing a computer to execute the method of identifying at least one face region having a predominant contribution to face recognition of the first aspect of the invention.

According to a third aspect of the invention there is provided a system for identifying at least one face region having a predominant contribution to face recognition comprising:

(i) a face image database comprising a set of face images,
(ii) an occluder placeable at a plurality of locations of each of the set of face images,
(iii) a processor running a face-recognition model which predicts a non-occluded identity class and an occluded identity class for each of the plurality of locations of each of the set of face images,
(iv) a comparator which compares the non-occluded identity class with the occluded identity class to generate an occlusion map of occlusion results for each of the set of face images,
(v) an aggregation module which combines the occlusion maps for each of the set of face images to generate an aggregate occlusion map, and
(vi) an identification module which uses the aggregate occlusion map to identify the at least one face region having a predominant contribution to face recognition.

According to a fourth aspect of the invention there is provided a method of augmenting a set of training face images for a face-recognition model comprising using the at least one face region having a predominant contribution to face recognition identifies using the method of the first aspect of the invention to place an occluder at a face location comprising the face region of a training face image to generate an occluded training face image and adding the occluded training face image to the set of training face images.

The occluded training face image may be generated and added to the set of training face images before the training set is used for training. The occluded training face image may be generated during training and added to the set of training face images during use of the training set for training.

The set of training face images may be augmented with an occluded training face image generated using a face region for placing of the occluder identified as the face region comprising a face location having a highest aggregate occlusion map value of the aggregate occlusion map. The set of training face images may be augmented with an occluded training face image generated using a face region for placing of the occluder identified as the face region comprising a face location having a highest probability value of the probability distribution.

According to a fifth aspect of the invention there is provided a computer program, tangibly embodied on a non-transitory computer readable medium, the computer program including instructions for causing a computer to execute the method of augmenting a set of training face images for a face-recognition model of the fourth aspect of the invention.

According to a sixth aspect of the invention there is provided a method of training a face-recognition model to recognise faces using the augmented set of training face images of the method of the fourth aspect of the invention.

According to a seventh aspect of the invention there is provided a computer program, tangibly embodied on a non-transitory computer readable medium, the computer program including instructions for causing a computer to execute the method of training a face-recognition model of the sixth aspect of the invention.

Augmenting the set of training face images creates more images of a particular face in the training set. By identifying which face regions a face-recognition model relies on most and occluding these to create occluded training face images, it is possible to reduce the reliance on these face regions and to force the face-recognition model to extract discriminative features from the non-occluded face regions. This achieves the goal of reducing the face-recognition model reliance on the face regions having a predominant contribution to face recognition identified in the method of the first aspect of the invention.

For example, it has been found that a central face region is a face region relied on most by a face-recognition model. This could be due to the presence of non-frontal training face images in the set of training face images. In these training face images, the outer regions of the face may not be visible and the face-recognition model is not able to learn features from these regions that are as discriminative as features extracted from the central face region. It is possible to reverse this behaviour by training the face-recognition model with more training face images that present occlusions located in the central face region as this will force the model to learn more discriminative features from outer face regions.

Using the augmented set of training face images during training of the face-recognition model forces the model to learn discriminative features from all face regions more equally, including those that typical face-recognition approaches tend to pay less attention to. Training the face-recognition model with the augmented set of training face images produces a model that is more robust to face occlusions, artificial or real-life. The face-recognition model trained in this way has demonstrated noticeable performance improvement on face images presenting real-life occlusions in a publicly available face image set.

Description of the Invention

Embodiments of the invention will now be described by way of example with reference to the accompanying drawings in which :

Figure 1 is a flow chart of a method of identifying at least one face region having a predominant contribution to face recognition according to the first aspect of the invention;
Figure 2 is a flow chart showing the method of Figure 1 in more detail;
Figure 3 is a schematic representation of a system for identifying at least one face region having a predominant contribution to face recognition according to the third aspect of the invention, and
Figure 4 is a flow chart of a method of augmenting a set of training face images for a face-recognition model according to the fourth aspect of the invention.

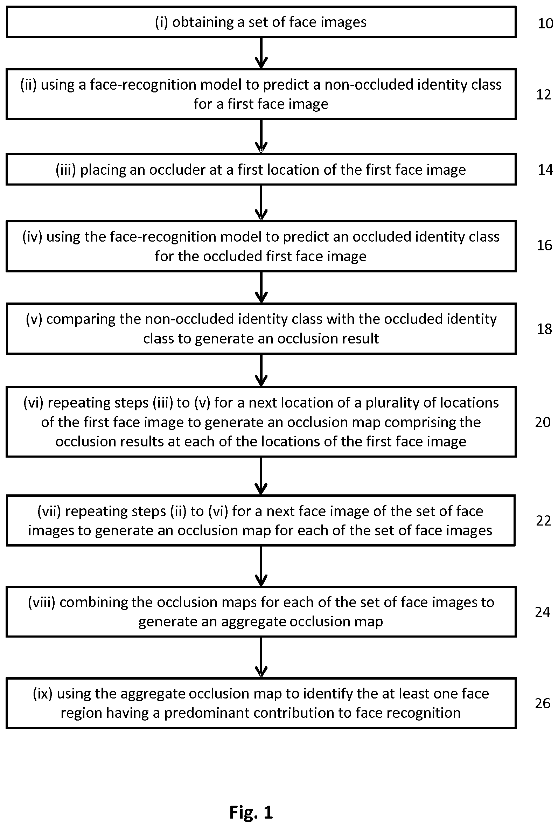

Referring to Figure 1, the method of identifying at least one face region having a predominant contribution to face recognition comprises:

(i) obtaining a set of face images 10,
(ii) using a face-recognition model to predict a non-occluded identity class for a first face image 12,
(iii) placing an occluder at a first location of the first face image 14,
(iv) using the face-recognition model to predict an occluded identity class for the occluded first face image 16,
(v) comparing the non-occluded identity class with the occluded identity class to generate an occlusion result 18,

(vi) repeating steps (iii) to (v) for a next location of a plurality of locations of the first face image to generate an occlusion map comprising the occlusion results at each of the locations of the first face image 20,

(vii) repeating steps (ii) to (vi) for a next face image of the set of face images to generate an occlusion map for each of the set of face images 22,

(viii) combining the occlusion maps for each of the set of face images to generate an aggregate occlusion map 24, and

(ix) using the aggregate occlusion map to identify the at least one face region having a predominant contribution to face recognition 26.

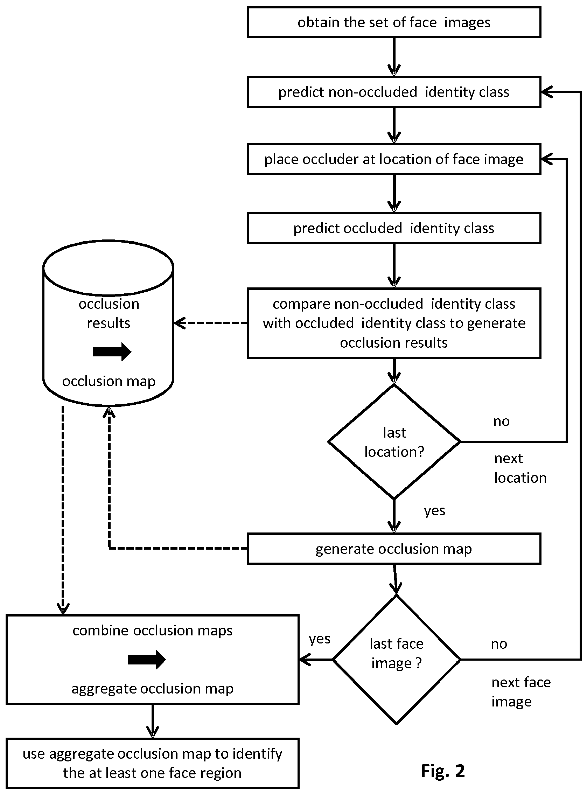

Referring to Figure 2, the method of identifying at least one face region having a predominant contribution to face recognition is shown in more detail.

The set of face images are obtained from a database of face images. In this embodiment, the set of face images comprises 1000 greyscale face images each comprising a size of 100 pixels by 100 pixels. It will be appreciated that a different number, colour and size of face images may be used.

A first face image is selected and the face-recognition model is used to predict a non-occluded identity class for a first face image. The non-occluded identity class is the identity class predicted by the model when a face does not comprise an occlusion. The face-recognition model comprises a convolutional neural network (CNN) classification face-recognition model. The face-recognition model predicts the non-occluded identity class for the first face image using a pre-trained, CNN-based classifier.

The occluder is then placed at a first location of the first face image. This comprises overlaying the occluder on the first face image, placing the occluder centre point at the first face image location. In this embodiment, the occluder comprises a pre-determined size of approximately 20 pixels by approximately 20 pixels. Such an occluder can be used to cover small face regions such as one eye, the nose or mouth. It will be appreciated that different pre-determined sizes of the occluder can be used, for example a size of approximately 20 pixels by approximately 40 pixels used to cover wider face regions such as both eyes and/or a size of approximately 40 pixels by approximately 40 pixels used to cover several face regions simultaneously. The occluder used in this embodiment comprises a random greyscale intensity distribution with speckle noise added.

The face-recognition model then predicts an occluded identity class for the occluded first face image. This is the identity class predicted by the model when a face does comprise an occlusion. The face-recognition model predicts the occluded identity class using a pre-trained, CNN-based classifier.

Comparing the non-occluded identity class with the occluded identity class generates an occlusion result comprising a measure of classification error of the face-recognition model. The classification error is the error between prediction of the non-occluded identity class and prediction of the occluded identity class, i.e. the error introduced when the occluder is placed at the first location of the first face image. In this embodiment, the non-occluded identity class is assumed to be correct and a binary occlusion result is generated comprising a classification error of 0 when the occluded identity class equals the non-occluded identity class and a classification error of 1 when the occluded identity class is different from the non-occluded identity class. The binary occlusion result, $O_I(i, j)$, for a location $(i, j)$ of a face image I is defined as

$$O_I(i, j) = \begin{cases} 0, \text{ if } y'_{i,j} = y \\ \\ 1, \text{ otherwise} \end{cases}$$

where $y'_{i,j}$ is the predicted occluded identity class and y is the predicted non-occluded identity class. Thus the occlusion result indicates whether placing an occluder at a particular location of a face image would cause the face-recognition model to predict an incorrect identity class.

The occluder is then placed at a next location of the first face image and the steps of predicting an occluded identity class and comparing the non-occluded identity class with the occluded identity class to generate an occlusion result are repeated. The steps are repeated until the occluder has been applied to each of a plurality of locations of the first face image. The occlusion results at each of the plurality of locations of the first face image are stored and are used to generate an occlusion map for the first face image. The occlusion map is also stored.

A next face image of the set of face images is then selected and the steps of predicting a non-occluded identity class, placing the occluder at the plurality of locations of the next face image, predicting an occluded identity class at each location and comparing the non-occluded identity class with the occluded identity class at each location to generate occlusion results are repeated. The occlusion results at each of the plurality of locations of the next face image are stored and used to generate an occlusion map for the next face image. The occlusion map for the next face image is also stored. This process is repeated for each of the set of face images to generate and store an occlusion map for each of the face images.

The occlusion maps for each of the set of face images are then combined to generate an aggregate occlusion map which is stored. Combining the occlusion maps comprises averaging the occlusion results of each occlusion map at each location of the face images to provide an aggregate occlusion map comprising an aggregate occlusion map value at each location of the face images. Each aggregate occlusion map value is the mean classification error of the face-recognition model at the location of the face images.

The aggregate occlusion map is then used to identify the at least one face region having a predominant contribution to face recognition. This comprises identifying the at least one face region comprising a face location having a highest aggregate occlusion map value. This face location will comprise the face location resulting in the highest measure of classification error of the face-recognition model.

The at least one face region is a region from which the face-recognition model extracts the most discriminative facial features, which are important to achieve a high face recognition accuracy of the model. Moving the occluder around locations of the face images to generate the aggregate occlusion map gives a manner in which to visualise the region or regions of a face which are most sensitive in the face image identity classification process and which have the highest impact on face recognition accuracy of the model.

In an embodiment of the invention, the aggregate occlusion map may be used to generate a probability distribution comprising a probability value at each location of the face images. The probability distribution is generated by applying a softmax function to the aggregate occlusion map. The softmax function uses a temperature parameter, such as any of a temperature parameter of 0.25 with an occluder of size 20 pixels x 20 pixels, a temperature parameter of 0.4 with an occluder of size 20 pixels x 40 pixels, a temperature parameter of 0.6 with an occluder of size 40 pixels x 40 pixels. The probability distribution generated from the aggregate occlusion map is then used to identify the at least one face region having a predominant contribution to face recognition. This comprises identifying the at least one face region as the region comprising a face location of the probability distribution having a highest probability value.

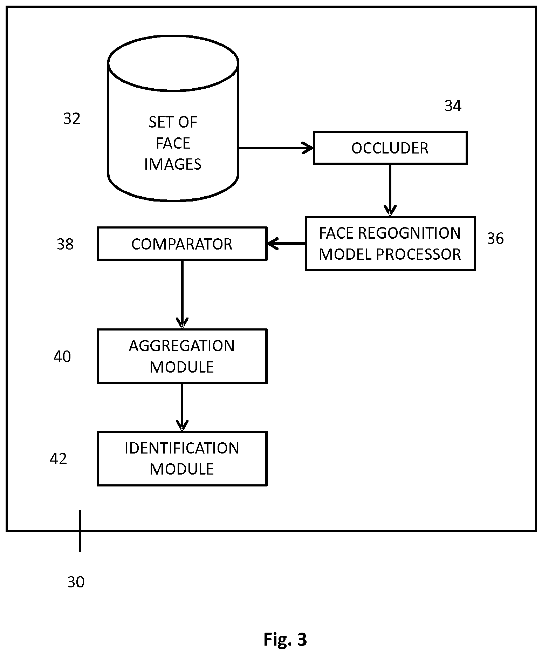

Referring to Figure 3, a system 30 for identifying at least one face region having a predominant contribution to face recognition comprises:

(i) a face image database 32 comprising a set of face images,
(ii) an occluder 34 placeable at a plurality of locations of each of the set of face images,
(iii) a processor 36 running a face-recognition model which predicts a non-occluded identity class and an occluded identity class for each of the plurality of locations of each of the set of face images,
(Iv) a comparator 38 which compares the non-occluded identity class with the occluded identity class to generate an occlusion map of occlusion results for each of the set of face images,
(v) an aggregation module 40 which combines the occlusion maps for each of the set of face images to generate an aggregate occlusion map, and
(vi) an identification module 42 which uses the aggregate occlusion map to identify the at least one face region having a predominant contribution to face recognition.

The occluder, face-recognition model processor, comparator and modules of the system 30 may be provided in hardware, software or a combination of hardware and software. One or more of the modules may be combined.

In an embodiment of the invention, the identification module 42 uses the aggregate occlusion map to generate a probability distribution comprising a probability value at each location of the face images. The probability distribution is generated by applying a softmax function to the aggregate occlusion map. The softmax function uses a temperature parameter, such as any of a temperature parameter of 0.25 with an occluder of size 20 pixels x 20 pixels, a temperature parameter of 0.4 with an occluder of size 20 pixels x 40 pixels, a temperature parameter of 0.6 with an occluder of size 40 pixels x 40 pixels. The probability distribution generated from the aggregate occlusion map is then used to identify the at least one face region having a predominant contribution to face recognition. This comprises identifying the at least one face region as the region comprising a face location of the probability distribution having a highest probability value.

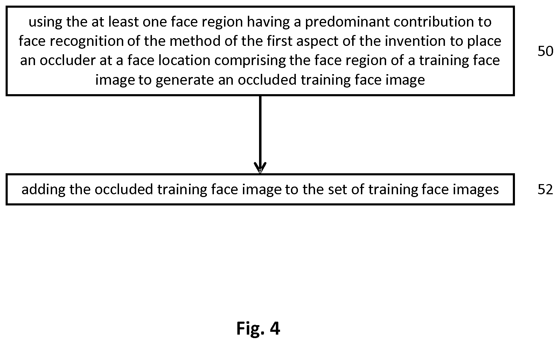

Referring to Figure 4, a method of augmenting a set of training face images for a face-recognition model comprises:

(i) using the at least one face region having a predominant contribution to face recognition of the method of the first aspect of the invention to place an occluder at a face location comprising the face region of a training face image to generate an occluded training face image 50, and
(ii) adding the occluded training face image to the set of training face images 52.

Occluded training face images are generated on-the-fly during training of the face-recognition system and added to the set of training face images during use of the training set for training.

The set of training face images can be augmented with an occluded training face image generated using a face region for placing of the occluder identified as the face region comprising a face location having a highest aggregate occlusion map value of the aggregate occlusion map. Additionally or alternatively, the set of training face images can be augmented with an occluded training face image generated using a face region for placing of the occluder identified as the face region comprising a face location having a highest probability value of the probability distribution.

## Claims

1. A method of identifying at least one face region having a predominant contribution to face recognition, comprising

   (i) obtaining a set of face images,
   (ii) using a face-recognition model to predict a non-occluded identity class for a first face image,
   (iii) placing an occluder at a first location of the first face image,
   (iv) using the face-recognition model to predict an occluded identity class for the occluded first face image,
   (v) comparing the non-occluded identity class with the occluded identity class to generate an occlusion result,
   (vi) repeating steps (iii) to (v) for a next location of a plurality of locations of the first face image to generate an occlusion map comprising the occlusion results at each of the locations of the first face image,
   (vii) repeating steps (ii) to (vi) for a next face image of the set of face images to generate an occlusion map for each of the set of face images,
   (viii) combining the occlusion maps for each of the set of face images to generate an aggregate occlusion map, and
   (ix) using the aggregate occlusion map to identify the at least one face region having a predominant contribution to face recognition.

2. A method according to claim 1 in which using the face-recognition model to predict a non-occluded identity class for a face image and an occluded identity class for an occluded face image comprises using a pre-trained, CNN-based classifier to predict the identity class.

3. A method according to claim 1 or claim 2 in which placing the occluder at a location of a face image comprises overlaying the occluder on the face image.

4. A method according to any preceding claim in which the occluder comprises a pre-determined size.

5. A method according to claim 4 in which is carried out using different pre-determined sizes of the occluder.

6. A method according to any preceding claim in which comparing the non-occluded identity class with the occluded identity class for a location of a face image generates an occlusion result comprising a measure of classification error of the face-recognition model.

7. A method according to any preceding claim in which combining the occlusion maps for each of the set of face images to generate the aggregate occlusion map comprises averaging the occlusion results of each occlusion map at each location of the face images to provide an aggregate occlusion map comprising an aggregate occlusion map value at each location of the face images, where each aggregate occlusion map value is the mean classification error of the face-recognition model at the location of the face images.

8. A method according to claim 7 in which using the aggregate occlusion map to identify the at least one face region having a predominant contribution to face recognition comprises identifying the at least one face region comprising a face location having a highest aggregate occlusion map value.

9. A method according to any preceding claim in which the aggregate occlusion map is used to generate a probability distribution comprising a probability value at each location of the face images.

10. A method according to claim 9 in which the probability distribution is generated by applying a softmax function to the aggregate occlusion map which uses different temperature parameters for different sizes of occluder.

11. A method according to claim 9 or claim 10 in which the probability distribution generated from the aggregate occlusion map is used to identify the at least one face region having a predominant contribution to face recognition by identifying the at least one face region as the region comprising a face location of the probability distribution having a highest probability value.

12. A computer program, tangibly embodied on a non-transitory computer readable medium, the computer program including instructions for causing a computer to execute the method of identifying at least one face region having a predominant contribution to face recognition of claims 1 to 11.

13. A system for identifying at least one face region having a predominant contribution to face recognition comprising:

    (i) a face image database comprising a set of face images,
    (ii) an occluder placeable at a plurality of locations of each of the set of face images,
    (iii) a processor running a face-recognition model which predicts a non-occluded identity class and an occluded identity class for each of the plurality of locations of each of the set of face images,
    (v) a comparator which compares the non-occluded identity class with the occluded identity class to generate an occlusion map of occlusion results for each of the set of face images,

(vi) an aggregation module which combines the occlusion maps for each of the set of face images to generate an aggregate occlusion map, and

(vii) an identification module which uses the aggregate occlusion map to identify the at least one face region having a predominant contribution to face recognition.

14. A method of augmenting a set of training face images for a face-recognition model comprising using the at least one face region having a predominant contribution to face recognition of claims 1 to 11 to place an occluder at the face region of a training face image to generate an occluded training face image and adding the occluded training face image to the set of training face images.

15. A method of training a face-recognition model to recognise faces using the augmented set of training face images of the method of claim 14.

| (i) obtaining a set of face images | 10 |

↓

| (ii) using a face-recognition model to predict a non-occluded identity class for a first face image | 12 |

↓

| (iii) placing an occluder at a first location of the first face image | 14 |

↓

| (iv) using the face-recognition model to predict an occluded identity class for the occluded first face image | 16 |

↓

| (v) comparing the non-occluded identity class with the occluded identity class to generate an occlusion result | 18 |

↓

| (vi) repeating steps (iii) to (v) for a next location of a plurality of locations of the first face image to generate an occlusion map comprising the occlusion results at each of the locations of the first face image | 20 |

↓

| (vii) repeating steps (ii) to (vi) for a next face image of the set of face images to generate an occlusion map for each of the set of face images | 22 |

↓

| (viii) combining the occlusion maps for each of the set of face images to generate an aggregate occlusion map | 24 |

↓

| (ix) using the aggregate occlusion map to identify the at least one face region having a predominant contribution to face recognition | 26 |

**Fig. 1**

obtain the set of face images

predict non-occluded identity class

place occluder at location of face image

predict occluded identity class

compare non-occluded identity class with occluded identity class to generate occlusion results

occlusion results

➡

occlusion map

last location?

no

next location

yes

generate occlusion map

combine occlusion maps

➡

aggregate occlusion map

last face image ?

yes

no

next face image

use aggregate occlusion map to identify the at least one face region

**Fig. 2**

**Fig. 3**

using the at least one face region having a predominant contribution to face recognition of the method of the first aspect of the invention to place an occluder at a face location comprising the face region of a training face image to generate an occluded training face image — 50

adding the occluded training face image to the set of training face images — 52

**Fig. 4**

**Europäisches Patentamt**
**European Patent Office**
**Office européen des brevets**

# EUROPEAN SEARCH REPORT

Application Number

EP 18 18 0136

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Bolei Zhou ET AL: "Object Detectors Emerge in Deep Scene CNNs", , 15 April 2015 (2015-04-15), XP055528912, Retrieved from the Internet: URL:https://arxiv.org/pdf/1412.6856.pdf [retrieved on 2018-11-30] | 1-8,12, 13 | INV. G06K9/00 ADD. G06K9/62 G06K9/46 |
| Y | * abstract * * section 3.2 * * figure 10 * | 9-11,14, 15 | |
| Y | Matthew D. Zeiler ET AL: "Visualizing and Understanding Convolutional Networks" In: "Serious Games", 3 February 2014 (2014-02-03), Springer International Publishing, Cham, XP055526539, ISSN: 0302-9743 ISBN: 978-3-642-15171-2 vol. 8689, pages 818-833, DOI: 10.1007/978-3-319-10590-1_53, * section 4.2 * * figure 6 * | 9-11 | |
| X | MATZEN KEVIN ET AL: "BubbLeNet: Foveated Imaging for Visual Discovery", 2015 IEEE INTERNATIONAL CONFERENCE ON COMPUTER VISION (ICCV), IEEE, 7 December 2015 (2015-12-07), pages 1931-1939, XP032866546, DOI: 10.1109/ICCV.2015.224 [retrieved on 2016-02-17] | 1 | |
| Y | * abstract * * section 2 * * section 3 * | 14,15 | |

TECHNICAL FIELDS SEARCHED (IPC)

G06K

The present search report has been drawn up for all claims

| Place of search | Date of completion of the search | Examiner |
|---|---|---|
| The Hague | 3 December 2018 | Angelopoulou, Maria |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)